(19) Europäisches Patentamt / European Patent Office / Office européen des brevets

(11) **EP 4 667 765 A1**

(12) **EUROPEAN PATENT APPLICATION**

(43) Date of publication:
**24.12.2025 Bulletin 2025/52**

(21) Application number: 24182695.7

(22) Date of filing: **17.06.2024**

(51) International Patent Classification (IPC):
**F16C 32/04** *(2006.01)*

(52) Cooperative Patent Classification (CPC):
**F16C 32/0463; F16C 32/0451; F16C 32/0457;
F16C 32/0476; F16C 32/048**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Université catholique de Louvain
1348 Louvain-la-Neuve (BE)**

(72) Inventors:
• **DEHEZ, Bruno**
  **1348 Louvain-la-Neuve (BE)**
• **ROBERT, Adrien**
  **1348 Louvain-la-Neuve (BE)**
• **VAN VERDEGHEM, Joachim**
  **1348 Louvain-la-Neuve (BE)**

(74) Representative: **den Braber, Gérard Paul
PROXIP
Tour CIT, bureau 918
3, rue de l'Arrivée
75749 Paris Cedex 15 (FR)**

(54) **ELECTRIC MACHINE WITH AN ELECTRODYNAMIC BEARING**

(57) An electric machine with an electrodynamic bearing comprises a rotor (101) from which a magnetic field emanates and a stator comprising a pair of windings (105, 106). The pair of windings (105, 106) are electrically coupled in parallel to provide electrodynamic positioning of the rotor (101) with respect to the pair of windings (105, 106) along a translational axis (306). The windings (105, 106) having different impedances as a result of at least one of the following: One winding has an impedance that is nominally different from that of the other winding. The impedance of the one winding and that of the other winding vary in a different way with a displacement of the rotor (101) along the translational axis. A sensing circuit (305) indicates a movement direction of the rotor (101) along the translational axis. A driver (301) applies a drive signal (307) to the pair of windings (105, 106) causing a drive current to flow in the pair of windings (105, 106). The drive signal (307) is controlled so that the drive current has a d-axis component generating a d-axis magnetic field emanating from the pair of windings (105, 106). The d-axis magnetic field exerts a force on the rotor (101) opposite to the movement direction of the rotor (101) along the translational axis. This allows stable operation over a relatively wide speed range.

FIG. 3

EP 4 667 765 A1

**Description**

FIELD OF THE INVENTION

An aspect of the invention relates to an electric machine with an electrodynamic bearing. The electric machine may be used in applications where high torque density is required, or high spin speed, or high purity, or compactness, or any combination of these. These applications may concern ventricular assist devices, blowers and fans, reaction wheels, flywheels, pumps, and so-called high purity devices, as well as other electromechanical systems. Other aspects of the invention relate to an electromechanical system comprising an electric machine, and to method of operating an electric machine with an electrodynamic bearing.

BACKGROUND ART

An electric machine may comprise a rotor and a stator that jointly form a motor or a generator. The rotor needs to be correctly positioned with respect to the stator, also when the machine is active with the rotor spinning. To that end, bearings are used. A bearing may be mechanical, such as, for example, a roller bearing. However, mechanical bearings suffer from wear, which presents reliability and maintenance issues. Moreover, mechanical bearings introduce losses due to friction.

A contactless bearing may use (electro-)magnetic forces to keep the rotor correctly positioned in a degree of freedom of movement of the rotor. Such a contactless bearing may therefore generally be referred to as a magnetic bearing. Compared to mechanical bearings, magnetic bearings are less subject to wear and, therefore, potentially more reliable, requiring less maintenance. Moreover, magnetic bearings are essentially frictionless.

A magnetic bearing may be based on a static magnetic field emanating from, for example, a permanent magnet. This magnetic field may exert a force on a rotor, which may be attractive or repulsive, that counteracts another force experienced by the rotor, keeping the rotor in a correct position. Earnshaw's theorem demonstrated an impossibility to keep a rotor correctly positioned in this manner in all degrees of freedom of movement that exist. In at least one degree of freedom of movement, another type of bearing must be used to correctly position the rotor. That is, an electrical machine necessarily comprises at least one bearing that is not based on a static magnetic field. Yet such a bearing may be contactless.

Namely, a magnetic bearing may be based on an interaction between a rotor and a stator when the rotor spins, that is, in a dynamic condition. There are basically two types of such a dynamic bearing, which may be referred to as active magnetic bearing and electrodynamic bearing. In an active magnetic bearing, the stator is made to produce a magnetic field component that interacts with the rotor so that the rotor experiences a force along a translational axis. The translational axis corresponds with the degree of freedom of movement of interest. The active magnetic bearing thus requires a control circuit to make the stator produce the magnetic field component interacting with the rotor. Moreover, the force experienced by the rotor must be controlled so that the rotor is kept in a correct position along the translational axis. The active magnetic bearing may therefore be relatively complex and costly. Moreover, the control circuit may be prone to errors, which compromises reliability.

An electrodynamic bearing may essentially be based on a rotor, from which a magnetic field emanates, and a stator comprising a pair of windings that are electrically coupled in parallel. The pair of windings may receive a drive signal that makes the rotor spin. In case the rotor is in an equilibrium position along a translational axis, the rotor does not cause a current to flow in the pair of windings. In a symmetrical configuration, the equilibrium position may correspond with a center position. However, in case the rotor is in a position other than the equilibrium position, the rotor causes a current to flow in the pair of windings, which may be referred to as an imbalance current. This imbalance current causes the pair of windings to generate a magnetic field exerting a force on the rotor directed toward the equilibrium position. The electrodynamic bearing may thus be passive, obviating a need for relatively complex control circuitry such as in the active magnetic bearing.

Unfortunately, electrodynamic bearings suffer from a stability problem. The stability problem manifests itself differently in thrust-type electrodynamic bearings and centering-type electrodynamic bearings. In the thrust type, electrodynamic positioning of the rotor is axially oriented. In the centering type, electrodynamic positioning of the rotor is radially oriented. A thrust-type electrodynamic bearing is unstable above a certain spin speed of the rotor, which constitutes a maximum speed. An electrical machine with such an electrodynamic bearing can therefore operate only up to this maximum speed. A centering-type electrodynamic bearing may be completely unstable: there may be no speed range within which this bearing may stably operate.

Patent publication ITTO20090655A1 mentions that stability control is a problem associated with electrodynamic bearings. An electrodynamic rotor-bearing assembly is proposed that is claimed to have a reduced instability range. The assembly comprises an electrodynamic bearing mounted in a movable way along a radial direction with respect a fixed support. The electrodynamic bearing supports a rotor in a radial direction. A damper is actuated by a movement of the electrodynamic bearing relative to the fixed support. The damper acts in the radial direction with respect to an axis of the rotor.

SUMMARY OF THE INVENTION

There is a need for a damping solution that offers an improvement in at least one of the following aspects: compactness, reliability and low cost.

An aspect of the invention, which is defined in claim 1, relates to an electric machine with an electrodynamic bearing comprising:

- a rotor from which a magnetic field emanates;
- a stator comprising a pair of windings that are electrically coupled in parallel to provide electrodynamic positioning of the rotor with respect to the pair of windings along a translational axis, the windings having different impedances as a result of at least one of the following:

  - one winding has an impedance that is nominally different from that of the other winding; and
  - the impedance of the one winding and that of the other winding vary in a different way with a displacement of the rotor along the translational axis;

- a sensing circuit adapted to indicate a movement direction of the rotor along the translational axis; and
- a driver adapted to apply a drive signal to the pair of windings causing a drive current to flow in the pair of windings, whereby the drive signal is controlled so that the drive current has a d-axis component generating a d-axis magnetic field emanating from the pair of windings, the d-axis magnetic field exerting a force on the rotor opposite to the movement direction of the rotor along the translational axis.

A further aspect of the invention, which is defined in claim 11, relates to an electromechanical system comprising an electric machine as defined hereinbefore.

Yet a further aspect of the invention, which is defined in claim 12, relates to a method of operating an electric machine with an electrodynamic bearing comprising:

- a rotor from which a magnetic field emanates;
- a stator comprising a pair of windings that are electrically coupled in parallel to provide electrodynamic positioning of the rotor with respect to the pair of windings along a translational axis, the windings having different impedances as a result of at least one of the following:

  - one winding has an impedance that is nominally different from that of the other winding; and
  - the impedance of the one winding and that of the other winding vary in a different way with a displacement of the rotor along the translational axis,

- a sensing circuit adapted to indicate a movement direction of the rotor along the translational axis; and

the method comprising:

- applying a drive signal to the pair of windings causing a drive current to flow in the pair of windings, whereby the drive signal is controlled so that the drive current has a d-axis component generating a d-axis magnetic field emanating from the pair of windings, the d-axis magnetic field exerting a force on the rotor opposite to the movement direction of the rotor along the translational axis.

In each of these aspects, a damping is introduced that alleviates the aforementioned stability problem of electrodynamic bearings. The damping may even eliminate the stability problem, making that there is no more maximum speed. What is more, the damping introduced in accordance with the invention does not require physical damping elements such as in the aforementioned patent publication. This allows better retaining advantages that electrodynamic bearings offer, which include compactness, reliability and low cost.

For the purpose of illustration, some embodiments of the invention are described in detail with reference to accompanying drawings. In this description, additional features will be presented, some of which are defined in the dependent claims, and advantages will be apparent.

BRIEF DESCRIPTION OF THE DRAWINGS

FIG. 1 is a simplified schematic perspective view of an elementary axial flux motor with an electrodynamic bearing.
FIG. 2 is a simplified schematic perspective view of an elementary radial flux motor with an electrodynamic bearing.
FIG. 3 is a schematic block diagram of a first exemplary electric machine based on the elementary axial flux motor with the electrodynamic bearing.
FIG. 4 is a schematic block diagram of a second exemplary electric machine based on the elementary radial flux motor with the electrodynamic bearing.
FIG. 5 is a schematic block diagram of a control scheme applicable in the first exemplary electric machine and the second exemplary electric machine.

DESCRIPTION OF SOME EMBODIMENTS

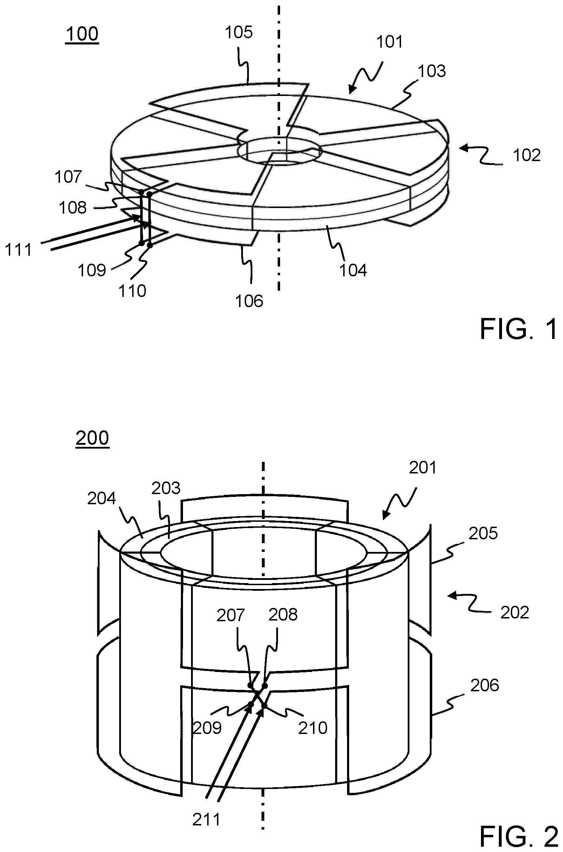

FIG. 1 schematically illustrates an example of an elementary axial flux motor 100. FIG. 1 provides a simplified schematic perspective view of this elementary axial flux motor 100. The elementary axial flux motor 100 comprises a rotor 101 from which an axially oriented magnetic field emanates. The elementary axial flux motor 100 further comprises a stator 102 that can produce an axially oriented magnetic field. These axially oriented magnetic fields may interact with each other. The elementary axial flux motor 100 may further comprise a pair permanent magnet centering bearings between which the rotor 101 and stator 102 are sandwiched. These permanent magnet centering bearings are not represented in FIG. 1 for the sake of simplicity.

In this embodiment, the rotor 101 is in the form of a disk-like permanent magnet structure that comprises three magnetic pole pairs. The disk-like permanent magnet structure has two main sides 103, 104, which are axially oriented. The two main sides 103, 104 will individually be referred to as upper main side 103 and lower main side 104 for ease of reading.

The stator 102 comprises a pair of windings 105, 106 between which the rotor 101 is positioned as illustrated in FIG. 1. These windings 105, 106 will individually be referred to as upper winding 105 and lower winding 106 for ease of reading. The upper winding 105 faces the upper main side 103 of the rotor 101. The lower winding 106 faces the lower main side 104. The upper winding 105 has a pair of ends 107, 108, which will individually be referred to as left end 107 and right end 108 for ease of reading. The lower winding 106 equally has a pair of ends 109, 110, which also individually be referred to as left end 109 and right end 110 for ease of reading.

FIG. 2 schematically illustrates an example of an elementary radial flux motor 200. FIG. 2 provides a simplified schematic perspective view of this elementary radial flux motor 200. The elementary radial flux motor 200 comprises a rotor 201 from which a radially oriented magnetic field emanates. The elementary radial flux motor 200 further comprises a stator 202 that can produce a radially oriented magnetic field. These radially oriented magnetic fields may interact with each other. Here too, the elementary radial flux motor 200 may further comprise a pair permanent magnet centering bearings between which the rotor 201 and stator 202 are sandwiched. These permanent magnet centering bearings are not represented in FIG. 2 for the sake of simplicity.

In this embodiment, the rotor 201 is in the form of a cylinder-like permanent magnet structure that comprises three magnetic pole pairs. The cylinder-like permanent magnet structure has two main sides 203, 204, which are radially oriented. The two main sides 203, 204 will individually be referred to as inner main side 203 and outer main side 204 for ease of reading.

The stator 202 comprises a pair of windings 205, 206 surrounding the rotor 201 as illustrated in FIG. 2. The windings 205, 206 will individually be referred to as upper winding 205 and lower winding 206 for ease of reading. The upper winding 205 faces an upper portion of the outer main side 204 of the rotor 201. The lower winding 206 faces a lower portion of the outer main side 204. The upper winding 205 has a pair of ends 207, 208, which will individually be referred to as left end 207 and right end 208 for ease of reading. The lower winding 206 equally has a pair of ends 209, 210, which will individually also be referred to as left end 209 and right end 210 for ease of reading.

The elementary axial flux motor 100 illustrated in FIG. 1 and the elementary radial flux motor 200 illustrated in FIG. 2 each have an electrodynamic bearing. For both these elementary motors 100, 200, the electrodynamic bearing is due to the upper winding 105, 205 and the lower winding 106, 206 being electrically coupled in parallel. Specifically, in the elementary axial flux motor 100, the left terminal 107 of the upper winding 105 is connected to the left terminal 109 of the lower winding 106. The right terminal 108 of the upper winding 105 is connected to the right end 110 of the lower winding 106. In the elementary radial flux motor 200 illustrated in FIG. 2, the left end 207 of the upper winding 205 is connected to the right end 210 of the lower winding 206. The right end 208 of the upper winding 205 is connected to the left end 209 of the lower winding 206.

The electrodynamic bearing basically operates as follows in both elementary motors 100, 200. The magnetic field that emanates from the rotor 101, 201 induces a magnetic flux in the upper winding 105, 205 and a magnetic flux in the lower winding 106, 206. An upward axial displacement of the rotor 101, 201 causes an increase in magnitude of the magnetic flux in the upper winding 105, 205 and a decrease in magnitude of the magnetic flux in the lower winding 106, 206 of the stator 102, 202. Conversely, a downward axial displacement of the rotor 101, 201 causes a decrease in magnitude of the magnetic flux in the upper winding 105, 205 and an increase in magnitude of the magnetic flux in the lower winding 106, 206 of the stator 102, 202

An axial displacement of the rotor 101, 201 thus causes a magnetic flux change in the upper winding 105, 205 and a magnetic flux change in the lower winding 106, 206. One of the two aforementioned magnetic flux changes is an increase in magnitude, whereas the other is a decrease in magnitude. The upper winding 105, 205 and the lower winding 106, 206 are electrically coupled in parallel so that the magnetic flux change in the upper winding 105, 205 and the magnetic flux change in the lower winding 106, 206 generate an imbalance current in the pair of windings 105, 106, 205, 206. This imbalance current is generated when the rotor 101, 201 rotates. The imbalance current causes the magnetic field produced by the stator 102, 202 to have a component that exerts a restoring force on the rotor 101, 201 counteracting the axial displacement. The rotor 101, 201 may thus maintain an equilibrium axial position. The rotor 101, 201 may remain suspended between the pair of windings 105, 106, 205, 206 despite gravity, or another external force.

It should be noted that, for the sake of explanation, the elementary axial flux motor 100 illustrated in FIG. 1 and the elementary radial flux motor illustrated in FIG. 2 are highly simplified representations. An element of simplification consists in illustrating these elementary motors as being single phase. In practice, electric motors may be multiphase comprising multiple pairs of windings, whereby a pair of winding corresponds with a phase. For example, a three-phase electric motor may be based on the elementary axial flux motor 100 illustrated in FIG. 1, or the elementary radial flux motor illustrated in FIG. 2, by adding two additional pairs of windings. These two additional pairs of windings may be angularly shifted with respect to each other and with respect to the pair of windings 105, 106, 205, 206 represented in FIG. 1 and in FIG. 2, respectively.

Another element of simplification consists in the windings 105, 106, 205, 206 being represented as having each a single turn. In practice, a winding may comprise multiple turns. Moreover, there are various winding schemes according to which the windings 105, 106, 205, 206 may be implemented, including lap winding and wave winding. Also, the winding may comprise ferromagnetic circuits, such as, for example, yokes, slots, which are not represented in FIGS. 1 and 2 for the sake of simplicity.

Yet another element of simplification, or rather, illustration, consists in the rotor 101, 201 comprising three magnetic pole pairs. The rotor 101, 201 may comprise a greater number of pole pairs. Moreover, the rotor 101, 201 may have a structure different from those illustrated in FIGS. 1 and 2. For example, permanent magnets that provide magnetic pole pairs may be arranged differently from what is shown in these figures. Conversely, the rotor 101, 201 may have only two pole pairs, or even a single pole pair. Notwithstanding the simplifications, and the illustration being based on three pole pairs, the electrodynamic bearing basically operates as discussed hereinbefore in other embodiments too.

The electrodynamic bearing discussed hereinbefore generally operates in a certain speed range between a minimum speed and a maximum speed. The term speed refers to the speed at which the rotor 101, 201 spins about its rotation axis, that is, a rotor spin speed. The lower the rotor spin speed is, the weaker the restoring force produced by the electrodynamic bearing will be. At a relatively low rotor spin speed, the restoring force may be too weak to counter an axial displacement of the rotor 101, 201. Starting from such a low rotor spin speed, the minimum speed of the speed range is the rotor spin speed at which the restoring force becomes sufficiently strong to counter an axial displacement of the rotor 101, 201. An electric machine with electrodynamic bearing may therefore comprise some kind of starting bearing, which may be mechanical. This starting bearing maintains the rotor 101, 201 in a desired axial position, or in a desired range of axial positions, with respect to the pairs of windings 105, 106, 205, 206, at rotor spin speeds below the minimum speed.

The maximum speed of the speed range is the rotor spin speed at which the electrodynamic bearing becomes unstable, when increasing starting from a speed in the speed range. For the embodiments discussed hereinbefore, the maximum speed may be expressed by the following equation:

$$\omega_e = \frac{R}{pL_{S,c}}$$

wherein $\omega_e$ represents the maximum speed, R represents a phase resistance of the upper winding 105, 205 and of the lower winding 106, 206, $p$ represents the number of pole pairs, and $L_{S,c}$ represents a synchronous suspension inductance, which is defined in the article by J. Van Verdeghem et al, entitled "Impact of Ferromagnetic Yokes on Axial Flux Passively Levitated Self-Bearing Machines," in 2022 25th International Conference on Electrical Machines and Systems (ICEMS), Nov. 2022, pp. 1-6. This article will be referred to hereinafter as the ICEMS 2022 article.

The maximum speed defined hereinbefore may be increased by introducing damping in the electrodynamic bearing. However, a damping solution should preferably not significantly compromise advantages offered by the electrodynamic bearing, which include compactness, reliability and low cost. The damping solution that is discussed in what follows is particularly advantageous in this respect. Moreover, the damping solution may significantly increase the maximum speed and may even eliminate the maximum speed, ensuring stable operation from the minimum speed.

Basically, the damping solution takes the following into consideration. The upper winding 105, 205 and the lower winding 106, 206 each have an impedance, which may affect the electrodynamic bearing if the impedance of the upper winding 105, 205 and that of the lower winding 106, 206 are different. That is, an impedance imbalance between the upper winding 105, 205 and the lower winding 106, 206 may affect the electrodynamic bearing. Namely, in case a drive signal is applied to the pair of windings 105, 106, 205, 206, a drive current will flow through the pair of windings 105, 106, 205, 206. A portion of the drive current will flow through the upper winding 105, 205, and a portion will flow through the lower winding 106, 206. The impedance imbalance will cause a drive current imbalance: the portion of the drive current flowing through the upper winding 105, 205 will be greater or smaller than the portion flowing through the lower winding 106, 206. This current imbalance causes the magnetic field produced by the stator 102, 202 to have a further component, which adds to the component resulting from the imbalance current mentioned hereinbefore. This further component may also exert a force on the rotor 101, 201.

The aforementioned impedance imbalance may be due to the impedance of the upper winding 105, 205 being nominally different from that of the lower winding 106, 206. That is, the aforementioned impedances may differ by design. This may be qualified as a static impedance imbalance. Alternatively, or in addition thereto, the impedance of the upper winding 105, 205 and that of the lower winding 106, 206 may vary in a different way with an axial displacement of the rotor 101, 201. This may be qualified as a dynamic impedance imbalance.

For example, the dynamic impedance imbalance may occur in the elementary axial flux motor 100 illustrated in FIG. 1. The rotor 101 may be closer to the upper winding 105, 205 than to the lower winding 106, 206, or vice versa, due to an axial displacement of the rotor. The rotor 101 may comprise a material that has a magnetic permeability different from that in a space, formed by gaps, between the rotor 101 and the pair of windings 105, 106. The axial displacement of the rotor 101 may then cause the impedance of the upper winding 105, 205 to increase and that of the lower winding 106, 206 to decrease, or vice versa. An imbalance between the aforementioned impedances is introduced, or exacerbated.

The dynamic impedance imbalance in the elementary axial flux motor 100 illustrated in FIG. 1 may be amplified adding one or more elements comprising material having a magnetic permeability different from that in the space between the rotor 101 and the pair of windings 105, 106. These magnetic permeability elements may be attached to the rotor 101 so that these move in combination with the rotor 101 with respect to the pair of windings 105, 106. Regarding the elementary radial flux motor illustrated in FIG. 2, the dynamic impedance imbalance may be introduced in this motor by attaching such magnetic permeability elements to the rotor 201.

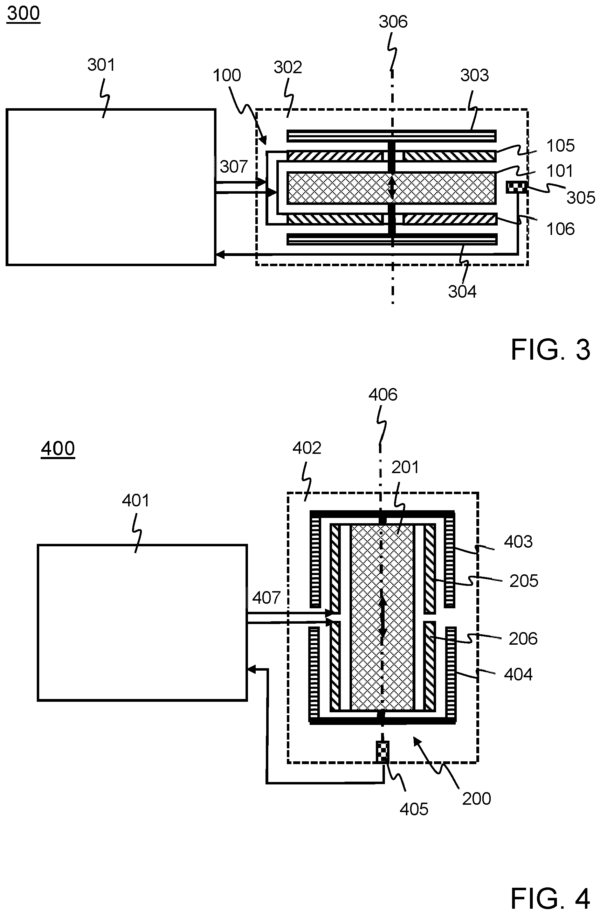

FIG. 3 illustrates a first exemplary electric machine 300 based on the elementary axial flux motor 100 with the electrodynamic bearing. FIG. 3 provides a schematic block diagram of the first exemplary electric machine 300. The first exemplary electric machine 300 comprises a driver 301 and an electric motor 302. FIG. 3 includes a schematic cross-sectional representation of the electric motor 302. The electric motor 302 is an evolved version of the elementary axial flux motor 100 illustrated in FIG. 1. Like elements are therefore denoted by like reference signs for the sake of simplicity and clarity.

The electric motor 302 comprises the following elements in addition to those of the elementary axial flux motor 100 discussed hereinbefore. The electric motor 302 additionally comprises a pair of ferromagnetic yokes 303, 304, which are attached to the rotor 101. The ferromagnetic yokes 303, 304 amplify, as it were, the dynamic impedance imbalance as discussed hereinbefore. In addition, the electric motor 302 comprises a sensing circuit 305 of which a function will be discussed hereinafter. The sensing circuit 305 is very schematically indicated in FIG. 3 without consideration of a position that would be appropriate.

FIG. 4 is a schematic block diagram of a second exemplary electric machine 400 based on the elementary radial flux motor with the electrodynamic bearing. FIG. 4 provides a schematic block diagram of the second exemplary electric machine 400. The second exemplary electric machine 400 equally comprises a driver 401 and an electric motor 402. FIG. 4 includes a schematic cross-sectional representation of the electric motor 402. The electric motor 402 is an evolved version of the elementary radial flux motor illustrated in FIG. 2. Like elements are therefore denoted by like reference signs for the sake of simplicity and clarity.

Like in the first exemplary electric machine 300, the electric motor 402 additionally comprises a pair of ferromagnetic yokes 403, 404, which are attached to the rotor 201. The ferromagnetic yokes 403, 404 provide the dynamic impedance imbalance as discussed hereinbefore. In addition, the electric motor 402 equally comprises a sensing circuit 405 similar to the sensing circuit 305 in FIG. 3 . Likewise, the sensing circuit 405 is very schematically indicated in FIG. 4 without consideration of a position that would be appropriate.

The first exemplary electric machine 300 and the second exemplary electric machine 400 basically operates as follows, assuming that the rotor spin speed exceeds the minimum speed. The electrodynamic bearing electrodynamically positions the rotor 101, 201 with respect to the pair of windings 105, 106, 205, 206 along a translational axis 306, 406, as discussed hereinbefore. In this embodiment, the translational axis 306, 406 may correspond with the rotation axis of the rotor. That is, an axial displacement of the rotor as discussed hereinbefore occurs along the translation axis.

The driver 301, 401 applies a drive signal 307, 407 to the pair of windings 105, 106, 205, 206, which causes a drive current to flow in the pair of windings 105, 106, 205, 206. The drive current comprises a q-component, which is a torque producing current. That is, the q-component causes the pair of windings 105, 106, 205, 206 to produce a magnetic field that exerts a torque on the rotor 101, 201. This makes the rotor 101, 201 spin. The driver 301, 401 may control the q-component of the drive signal 307, 407 so that the rotor 101, 201 spins at a desired speed.

The impedance imbalance discussed hereinbefore opens a way to efficiently introduce damping in the electrodynamic bearing. Namely, in case the drive current comprises a d-component, the impedance imbalance will make that the pair of windings 105, 106, 205, 206 generates a d-axis magnetic field that exerts a force on the rotor 101, 201. This force may provide damping, which counters instability, if the force is opposite to a movement direction of the rotor 101, 201 along the translational axis 306, 406. That is, the force opposes an axial movement of the rotor 101, 201. The damping may be particularly efficient if the force increases with a velocity with which the rotor 101 ,201 moves along the translational axis 306, 406.

The sensing circuit 305 in the first exemplary electric machine 300 illustrated in FIG. 3 may indicate the movement direction of the rotor 101 along the translational axis 306 as well as the velocity with which the rotor 101 moves. The same applies to the sensing circuit 405 in the second exemplary electric machine 400 illustrated in FIG. 4. For example, the sensing circuit 305, 405 may comprise a position sensor adapted to measure a position of the rotor 101, 201 on the translation axis. The sensing circuit 305, 405 may then indicate the movement direction of the rotor 101, 201 along the translational axis 306, 406 based on the position measured by the position sensor. The sensing circuit 305, 405 may then also indicate the velocity with which the rotor 101, 201 moves.

Alternatively, or complementary, the sensing circuit 305, 405 may comprise a current sensor adapted to measure a current flowing through the pair of windings 105, 106, 205, 206, either directly or indirectly, for example, in the driver. The sensing circuit 305, 405 may then indicate the movement direction of the rotor 101, 201 along the translational axis 306, 406 based on the current measured by the current sensor. The same applies to the velocity with which the rotor 101, 201 moves. Namely, the current that is measured also includes one or more components that are induced in the pair of windings 105, 106, 205, 206 due to movement of the rotor 101, 201 along the translation axis. Such a component may be distinguished from the drive current, because the latter current is known to the driver, as it were.

In the first exemplary electric machine 300 and the second exemplary electric machine 400, a total restoring force exerted on the rotor 101, 201 may be expressed by the following equation:

$$F_z = -z \cdot \frac{\omega^2}{\omega^2 + \omega_e^2} \cdot \left( \underbrace{\frac{3K_{\theta,z}^2}{L_{S,c}}}_{k_{ed}^\infty} + \underbrace{\frac{L_{z,c}^2}{2L_{S,c}} \cdot (I_{M,d}^2 + I_{M,q}^2)}_{k_{rel}^\infty} + \underbrace{\sqrt{6} \cdot K_{\theta,z} \cdot \frac{L_{z,c}}{L_{S,c}} \cdot I_{M,d}}_{k_{cross}^\infty} \right)$$

in which $F_z$ represents the total restoring force, $\underline{z}$ represents a position of the rotor 101, 201 with respect to the equilibrium position, $\omega$ represents the rotor spin speed, $\omega_e$ represents the maximum speed defined hereinbefore, $K_{\theta,z}$ represents the gradient of the magnetic flux induced in the pair of windings 105, 106, 205, 206, $L_{S,c}$ represents the synchronous suspension inductance, $L_{z,c}$ represents the gradient of the synchronous suspension inductance along the translation axis, $I_{M,d}$ represents the d-axis component of the drive current, and $I_{M,q}$ represents a q-axis component of the drive current, which is torque producing. The equation discussed here will be referred to hereinafter as the restoring force equation.

The restoring force equation presented in the preceding paragraph has three terms denoted $k_{ed}^\infty$, $k_{rel}^\infty$, and $k_{cross}^\infty$, multiplied by a common factor depending on the rotor spin speed $\omega$ and the rotor position with respect to the equilibrium position $\underline{z}$. The term $k_{ed}^\infty$ represents an electrodynamic stiffness, the term $k_{rel}^\infty$ represents a reluctant stiffness, and the term $k_{cross}^\infty$ represents a cross stiffness. The electrodynamic stiffness $k_{ed}^\infty$ relates to the basic operation of the electrodynamic bearing discussed hereinbefore. The reluctant stiffness $k_{rel}^\infty$ relates to the effects of the impedance imbalance described hereinbefore. The cross stiffness $k_{cross}^\infty$ relates to a combination of the basic operation of the electrodynamic bearing in the presence of the dynamic impedance imbalance.

The restoring force equation shows that the total restoring force $F_z$ exerted on the rotor 101, 201 is dependent on the d-axis current when there is an impedance imbalance. Specifically, the reluctant stiffness $k_{rel}^\infty$ and the cross stiffness

$k_{cross}^{\infty}$ terms occur when there is an impedance imbalance. These terms vary as a function of the d-axis current. A damping force may thus be generated by means of the d-axis current.

As an example, the d-axis component of the drive current may be proportional to the velocity with which the rotor 101, 201 moves along the translation axis. The d-axis component may then be expressed by the following equation:

$$I_{M,d} = K_p \cdot \dot{z} \cdot sign(z)$$

wherein $K_p$ represent a gain factor, $\dot{z}$ represents the velocity with which the rotor 101, 201 moves along the translation axis, and *sign(z)* represents the sign of the position of the rotor 101, 201 with respect to the equilibrium position. This equation will be referred to hereinafter as the d-axis component equation.

The variable $I_{M,d}$ representing the d-axis component of the drive current in the restoring force equation may be substituted by the d-axis component equation. This then leads to the following equation if the term proportional to $\dot{z}^2$ is neglected:

$$F = -z \underbrace{\frac{\omega^2}{\omega^2 + \omega_e^2} \cdot \left[ \frac{3K_{\theta,z}^2}{L_{S,c}} + \frac{L_{z,c}^2}{2L_{S,c}} \cdot I_{M,q}^2 \right]}_{k_{tot}}$$

$$- \dot{z} \cdot z \cdot sign(z) \cdot \underbrace{\frac{\omega^2}{\omega^2 + \omega_e^2} \cdot \left[ \sqrt{6} \cdot K_{\theta,z} \cdot \frac{L_{z,c}}{L_{S,c}} \cdot K_p \right]}_{C_{z,I_{M,d}}}$$

This equation will be referred to hereinafter as the spring and damping force equation. Namely, the spring and damping force equation has a term representing a spring force and a term representing a damping force. The term representing the spring force is the term proportional to z representing a position of the rotor 101, 201 with respect to the equilibrium position. The term representing the damping force is the term proportional to z representing the velocity with which the rotor 101, 201 moves along the translation axis. The damping force has a damping coefficient, which is as follows:

$$C_{z,I_{Md}} = |z| \cdot \frac{\omega^2}{\omega_e^2 + \omega^2} \cdot \sqrt{6} \cdot K_{\theta,z} \cdot \frac{L_{d,z}}{L_{S,d}} \cdot K_p$$

Assuming a steady state condition with a constant external force $F_e$ applied to the rotor 101, 201, which may be gravity, the damping coefficient may be expressed as follows:

$$C_{z,I_{Md}} = \frac{|F_e|}{k_{tot}^{\infty}} \cdot \sqrt{6} \cdot K_{\theta,z} \cdot \frac{L_{d,z}}{L_{S,d}} \cdot K_p$$

in which $k_{tot}^{\infty}$ represents an asymptotic stiffness, which is reached at infinite rotor spin speed characterizing a suspension capability of the electric motor 302, 402, regardless of the position of the rotor 101, 201 with respect to the equilibrium position and regardless of the rotor spin speed.

It is possible to define a minimal damping coefficient ensuring stability of the electrodynamic bearing up to an infinitely high speed, thus eliminating the maximum speed. The minimal damping coefficient may be expressed as follows:

$$C_{z,min} = \frac{k_{tot}^{\infty} \cdot L_{S,c}}{8R}$$

This minimal damping coefficient is discussed in the article by J. Van Verdeghem et al, entitled "Dynamical Modeling of Passively Levitated Electrodynamic Thrust Self-Bearing Machines", published in IEEE Transactions on Industry Applications, vol. 55, no. 2, pp. 1447-1460, Mar. 2019.

Based on this minimal damping coefficient, a minimum value of the gain factor $K_p$ may then be determined ensuring stability of the electrodynamic bearing up to an infinitely high speed, thus eliminating the maximum speed. The minimum value of the gain factor $K_p$ may be expressed as follows:

$$K_p = \frac{(k_{tot}^{\infty} \cdot L_{S,c})^2}{8\sqrt{6} \cdot RK_{\theta,z}L_{z,c} \cdot |F_e|}$$

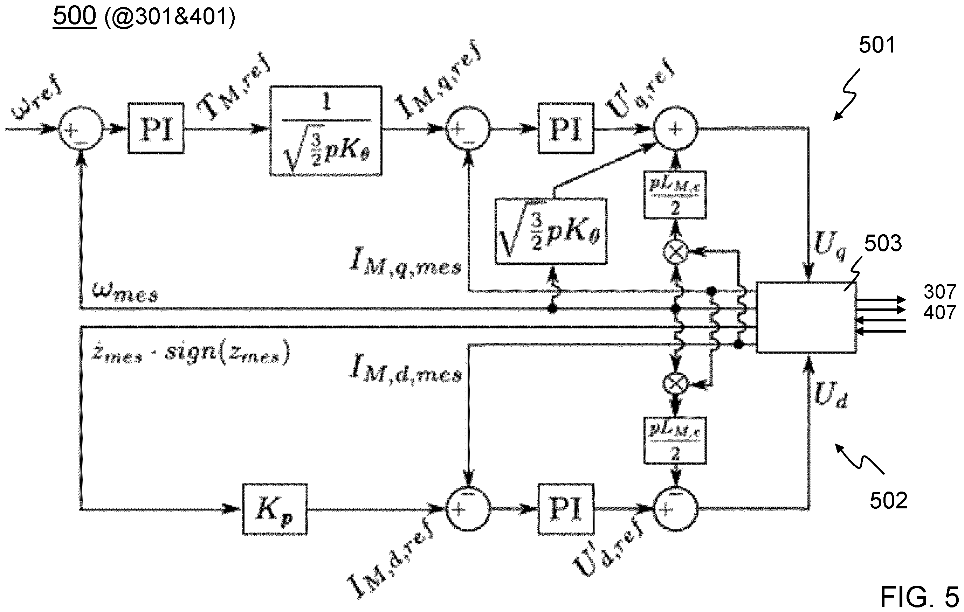

<u>FIG. 5</u> schematically illustrates a control scheme 500 applicable in the first exemplary electric machine 300 and the second exemplary electric machine 400. FIG. 5 provides a schematic block diagram of the control scheme 500. Specifically, the driver 301, 401 may operate in accordance with this control scheme 500.

The schematic block diagram comprises an upper part that represents a drive control portion 501 of the control scheme 500. A lower part represents a damping control portion 502 of the control scheme 500. The drive control portion 501 essentially controls a q-axis coefficient $U_q$. The damping control portion 502 controls a d-axis coefficient $U_d$. The aforementioned coefficients $U_q$, $U_d$ are applied to a bidirectional Concordia-Park transformer 503, which generates the drive signal 307, 407 of the basis of these coefficients $U_q$, $U_d$. The q-axis coefficient $U_q$ and the d-axis coefficient $U_d$ essentially determine the aforementioned q-axis component and the aforementioned d-axis component, respectively, of the drive current that flows through the pair of windings 105, 106, 205, 206. The notations $\omega_{ref}$ and $\omega_{mes}$ represent a set point rotor spin speed and a measured rotor spin speed, respectively. The notation $\dot{z}_{mes}$ represents the velocity with which the rotor moves along the translation axis as indicated by the sensing circuit 305, 405. The notation $sign(z_{mes})$ represents a sign of a position of the rotor 101, 201 on this axis as indicated by the sensing circuit 305, 405.

The notations $I_{M,d,ref}$ and $I_{M,d,mes}$ represent a set point d-axis component of the drive current and a measured d-axis component of the drive current, respectively. The notations $I_{M,q,ref}$ and $I_{M,q,mes}$ represent a set point q-axis component of the drive current and a measured q-axis component of the drive current, respectively. The notation $p$ represents the number of rotor pole pairs. The notation $K_{\theta}$ represents the amplitude of the magnetic flux intercepted by each winding in the equilibrium position. The notation $L_{M,c}$ represents a synchronous inductance of each winding as defined in the ICEMS 2022 article mentioned hereinbefore. The block containing the notation $PI$ represents a proportional-integral operation.

In the damping control portion 502 of the control scheme 500, the gain factor $K_p$ is applied to the product of the velocity with which the rotor 101, 201 moves along the translation axis $\dot{z}_{mes}$, and the sign of the position of the rotor 101, 201 on this axis $sign(z_{mes})$, both as indicated by the sensing circuit 305, 405. This product constitutes the set point d-axis component of the drive current $I_{M,d,ref}$, which is compared with the measured d-axis component of the drive current $I_{M,d,mes}$. A difference between these undergoes a proportional-integral operation $PI$, which, subsequent to a q-axis based compensation, produces the d-axis coefficient $U_d$ determining the d-axis component of the drive current.

NOTES

The embodiments described hereinbefore with reference to the drawings are presented by way of illustration. The invention may be implemented in numerous different ways. In order to illustrate this, some alternatives are briefly indicated.

There are numerous different ways of implementing electric machine with an electrodynamic bearing in accordance with the invention. The presented embodiments concern an electrodynamic bearing of the thrust type. In this type of electrodynamic bearing, the translational axis along which the rotor is electrodynamically positioned is axially oriented. The electrodynamic positioning exerts an axially oriented force on the rotor, which may be substantially parallel to a gravitational force.

In other embodiments, the electrodynamic bearing in accordance of the invention may be of the centering type. In this type of electrodynamic bearing, the translational axis along which the rotor is electrodynamically positioned is radially oriented. The electrodynamic positioning exerts a radially oriented force on the rotor. The damping solution discussed hereinbefore essentially operates in a similar manner in the electrodynamic bearing of the centering type. Specifically, the control scheme described with reference to FIG. 5 may equally be used to provide damping in the electrodynamic bearing of the centering type.

In the presented embodiments, ferromagnetic yokes are used to amplify the dynamic impedance imbalance. This is merely an example. In other embodiments, ferromagnetic yokes may be dispensed with, in particular if the dynamic impedance imbalance is already sufficient without these, or if there is sufficient static impedance imbalance. In yet other embodiments, elements other than ferromagnetic yokes may be used to amplify the dynamic impedance imbalance.

There are numerous different ways of controlling the drive signal in an electric machine in accordance with the invention. In the presented embodiments, the d-axis component of the drive current increases proportionally with the velocity indicated by the sensing circuit. This is merely an example. In another embodiment, the d-axis component of the drive current may increase proportionally with the square root of the velocity indicated by the sensing circuit. Other control functions may also be used. What is more, the d-axis component of the drive current may have a fixed magnitude, merely changing sign dependent on the movement direction of the rotor along the translational axis. The changing sign ensures that the d-axis magnetic field exerts a force on the rotor opposite to the movement direction.

The remarks made hereinbefore demonstrate that the embodiments described with reference to the drawings illustrate the invention, rather than limit the invention. The invention can be implemented in numerous alternative ways that are within the scope of the appended claims. All changes that come within the meaning and range of equivalency of the claims are to be embraced within their scope. Any reference sign in a claim should not be construed as limiting the claim. The verb "comprise" in a claim does not exclude the presence of other elements or other steps than those listed in the claim. The same applies to similar verbs such as "include" and "contain". The mention of an element in singular in a claim pertaining to a product, does not exclude that the product may comprise a plurality of such elements. Likewise, the mention of a step in singular in a claim pertaining to a method does not exclude that the method may comprise a plurality of such steps. The mere fact that respective dependent claims define respective additional features, does not exclude combinations of additional features other than those reflected in the claims.

## Claims

1.  An electric machine with an electrodynamic bearing comprising:

    - a rotor (101, 201) from which a magnetic field emanates;
    - a stator (102, 202) comprising a pair of windings (105, 106, 205, 206) that are electrically coupled in parallel to provide electrodynamic positioning of the rotor with respect to the pair of windings along a translational axis (306, 406), the windings having different impedances as a result of at least one of the following:

        - one winding has an impedance that is nominally different from that of the other winding; and
        - the impedance of the one winding and that of the other winding vary in a different way with a displacement of the rotor along the translational axis;

    - a sensing circuit (305, 405) adapted to indicate a movement direction of the rotor along the translational axis; and
    - a driver (301, 401) adapted to apply a drive signal (307, 407) to the pair of windings causing a drive current to flow in the pair of windings, whereby the drive signal is controlled so that the drive current has a d-axis component generating a d-axis magnetic field emanating from the pair of windings, the d-axis magnetic field exerting a force on the rotor opposite to the movement direction of the rotor along the translational axis.

2.  An electric machine according to claim 1, wherein:

    - the sensing circuit (305, 405) is adapted to indicate a velocity with which the rotor (101, 201) moves along the translational axis (306, 406); and
    - the driver (301, 401) adapted to control the drive signal (307, 407) so that the d-axis component of the drive current increases with the velocity indicated by the sensing circuit.

3.  An electric machine according to claim 2, wherein the driver (301, 401) adapted to control the drive signal (307, 407) so that the d-axis component of the drive current increases proportionally with the velocity indicated by the sensing circuit (305, 405).

4.  An electric machine according to claim 2, wherein the driver adapted (301, 401) to control the drive signal (307, 407) so that the d-axis component of the drive current increases proportionally with the square root of the velocity indicated by the sensing circuit (305, 405).

5.  An electric machine according to any of claims 2 to 4, comprising a d-axis control loop adapted to adjust the drive signal (307, 407) as a function of a difference between a set-point value for the d-axis component of the drive current and a measured value of the d-axis component of the drive current, the set-point value increasing with the velocity indicated by the sensing circuit (305, 405).

6.  An electric machine according to claim 1 to 5, wherein the sensing circuit (305, 405) comprises a position sensor adapted to measure a position of the rotor (101, 201) on the translation axis, the sensing circuit being adapted to indicate the movement direction of the rotor along the translational axis (306, 406) based on the position measured by the position sensor.

7. An electric machine according to claim 1 to 5, wherein the sensing circuit (305, 405) comprises a current sensor adapted to measure a current flowing through the pair of windings (105, 106, 205, 206), the sensing circuit being adapted to indicate the movement direction of the rotor (101, 201) along the translational axis (306, 406) based on the current measured by the current sensor.

8. An electric machine according to any of claims 1 to 7, wherein the electrodynamic bearing is of the thrust type, whereby the electrodynamic positioning provided by the pair of windings (105, 106, 205, 206) exerts an axially-oriented force on the rotor (101, 201).

9. An electric machine according to any of claims 1 to 7, wherein the electrodynamic bearing is of the centering type, whereby the electrodynamic positioning provided by the pair of windings exerts a radially-oriented force on the rotor.

10. An electric machine according to any of claims 1 to 9 comprising at least one permanent magnet bearing adapted to provide magnetostatic positioning of the rotor (101, 201) with respect to the pair of windings (105, 106, 205, 206) along another axis differently oriented with respect to the translational axis (306, 406).

11. An electromechanical system comprising an electric machine according to any of claims 1 to 10.

12. A method of operating an electric machine with an electrodynamic bearing comprising:

- a rotor (101, 201) from which a magnetic field emanates;
- a stator (102, 202) comprising a pair of windings (105, 106, 205, 206) that are electrically coupled in parallel to provide electrodynamic positioning of the rotor with respect to the pair of windings along a translational axis (306, 406), the windings having different impedances as a result of at least one of the following:

- one winding has an impedance that is nominally different from that of the other winding; and
- the impedance of the one winding and that of the other winding vary in a different way with a displacement of the rotor along the translational axis,

- a sensing circuit (305, 405) adapted to indicate a movement direction of the rotor along the translational axis; and

the method comprising:

- applying a drive signal (307, 407) to the pair of windings causing a drive current to flow in the pair of windings, whereby the drive signal is controlled so that the drive current has a d-axis component generating a d-axis magnetic field emanating from the pair of windings, the d-axis magnetic field exerting a force on the rotor opposite to the movement direction of the rotor along the translational axis.

FIG. 1

FIG. 2

300

301 100 302 306 303

307 105
101
305
106
304

## FIG. 3

400

406
201
402

401

407 403
205
206
404

405 200

## FIG. 4

FIG. 5

Europäisches
Patentamt

European
Patent Office

Office européen
des brevets

# EUROPEAN SEARCH REPORT

**Application Number**

EP 24 18 2695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VAN VERDEGHEM JOACHIM ET AL: "Impact of Ferromagnetic Yokes on Axial Flux Passively Levitated Self-Bearing Machines", 2022 25TH INTERNATIONAL CONFERENCE ON ELECTRICAL MACHINES AND SYSTEMS (ICEMS), IEEE, 29 November 2022 (2022-11-29), pages 1-6, XP034252968, DOI: 10.1109/ICEMS56177.2022.9982947 [retrieved on 2022-12-21] | 1,3-5,8, 10-12 | INV. F16C32/04 |
| Y | * the whole document * | 2,6,7,9 | |
| Y | EP 4 112 957 A1 (UNIV CATHOLIQUE LOUVAIN [BE]) 4 January 2023 (2023-01-04) * claims 1-15; figures 1,2 * | 2,6,7,9 | |
| A | VAN VERDEGHEM JOACHIM ET AL: "Fully Passively Levitated Self-Bearing Machine Implemented Within a Reaction Wheel", IEEE TRANSACTIONS ON INDUSTRY APPLICATIONS, IEEE SERVICE CENTER, PISCATAWAY, NJ, US, vol. 57, no. 6, 26 July 2021 (2021-07-26), pages 5782-5795, XP011889412, ISSN: 0093-9994, DOI: 10.1109/TIA.2021.3100015 [retrieved on 2021-11-22] * the whole document * | 1-12 | **TECHNICAL FIELDS SEARCHED (IPC)** F16C |

-/--

The present search report has been drawn up for all claims

| Place of search | Date of completion of the search | Examiner |
|---|---|---|
| The Hague | 12 November 2024 | Cerva-Pédrin, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

**EUROPEAN SEARCH REPORT**

Application Number

EP 24 18 2695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RUBIO GUILHERME CAVALCANTE ET AL: "Experimental Verification of Passive Axial Electrodynamic Suspension in a Bearingless Motor", IEEE OPEN JOURNAL OF INDUSTRY APPLICATIONS, IEEE, vol. 4, 17 January 2023 (2023-01-17), pages 49-59, XP011933595, DOI: 10.1109/OJIA.2023.3236984 [retrieved on 2023-01-18] * the whole document * ----- | 1-12 | |

TECHNICAL FIELDS
SEARCHED        (IPC)

The present search report has been drawn up for all claims

| Place of search | Date of completion of the search | Examiner |
|---|---|---|
| The Hague | 12 November 2024 | Cerva-Pédrin, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ..............................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 2695

12-11-2024

| Patent document cited in search report | | Publication date | Patent family member(s) | | Publication date |
|---|---|---|---|---|---|
| EP 4112957 | A1 | 04-01-2023 | EP | 4112957 A1 | 04-01-2023 |
| | | | EP | 4363736 A1 | 08-05-2024 |
| | | | JP | 2024522920 A | 21-06-2024 |
| | | | US | 2024372436 A1 | 07-11-2024 |
| | | | WO | 2023275096 A1 | 05-01-2023 |

**EP 4 667 765 A1**

**Patent documents cited in the description**

- IT TO20090655 A1

**Non-patent literature cited in the description**

- **J. VAN VERDEGHEM et al.** Impact of Ferromagnetic Yokes on Axial Flux Passively Levitated Self-Bearing Machines. *2022 25th International Conference on Electrical Machines and Systems (ICEMS)*, November 2022, 1-6

- **J. VAN VERDEGHEM et al.** Dynamical Modeling of Passively Levitated Electrodynamic Thrust Self-Bearing Machines. *IEEE Transactions on Industry Applications*, March 2019, vol. 55 (2), 1447-1460